# FASCICULE DE BREVET EUROPEEN

(11) **EP 1 579 691 B1**
(45) Date de publication et mention de la délivrance du brevet: **23.08.2006**
(21) Numéro de dépôt: 03815382.1
(22) Date de dépôt: 29.12.2003
(51) Int. Cl.: H04N 7/16

(54) **PROCEDE POUR ETABLIR UNE LISTE DE CONTENUS DANS UN APPAREIL CONNECT UN R SEAU DOMESTI QUE ET APPAREIL ASSOCIE AU PROCE DE**
VERFAHREN ZUM HERVORBRINGEN EINER LISTE VON INHALTEN IN EINERMIT EINEM NATIONALEN NETZWERK VERBUNDENEN EINRICHTUNG UND MIT DEM VERFAHRENASSOZIIERTE EINRICHTUNG
METHOD FOR DRAWING UP A LIST OF CONTENTS IN A DEVICE CONNECTED TO A DOMESTIC NETWORK AND DEVICE ASSOCIATED WITH SAID METHOD

(30) Priorité: 02.01.2003 FR 0300007
(43) Date de publication de la demande: 28.09.2005
(73) Titulaire: Thomson Licensing, 92100 Boulogne-Billancourt (FR)
(72) Inventeur: LUBBERS, Willem, F-35510 CESSON SEVIGNE (FR); SCHAEFER, Ralf, F-35690 Acigné (FR); MAETZ, Yves, F-35520 Melesse (FR)
(74) Mandataire: Le Dantec, Claude
(86) Numéro de dépôt international: PCT/EP2003/051111
(87) Numéro de publication internationale: WO 2004/066628

(56) Documents cités:
- WO-A-00/40017
- WO-A-01/46843
- FR-A- 2 818 074
- US-A- 5 758 259
- US-A- 6 104 334
- US-A1- 2001 005 847

## Description

L'invention concerne un procédé pour établir une liste de contenus dans un appareil contrôleur connecté à un réseau domestique auquel sont connectés plusieurs appareils fournissant chacun des contenus.

L'invention s'applique à la présentation de contenus dans un réseau numérique domestique dans lequel des appareils communiquent entre eux avec par exemple le protocole HAVi. On entend ici par contenu un service audio-video tel qu'une émission ou un film diffusé sur une chaîne télévisée numérique, un film préenregistré, un fichier audio mp3 enregistré sur un disque dur ou un baladeur, ou encore un fichier audio provenant d'un lecteur de disque optique audio. Une liste de contenus correspond ici à une collection de métadata. Une métadata décrit le contenu par des attributs ; par exemple une métadata d'un film comprend entre autres des attributs comme sa date de sortie, son genre, les acteurs et son résumé. Les métadata sont décrites par exemple dans le document accessible sur le site http://xml.coverpages.org/TVAnytime-SP003v11.pdf.

Les appareils interconnectés par le réseau domestique peuvent être par exemple des tuners recevant chacun plusieurs chaînes numériques diffusées par satellite ou par voie numérique terrestre, des moyens de stockage de données comme des disques durs dans lesquels sont enregistrés des contenus, des lecteurs de DVD, ainsi que des terminaux de télévision. Dans un réseau domestique, le nombre de services audio-video et audio potentiellement disponibles peut être important. A titre indicatif, il existe actuellement environ un millier de chaînes diffusées par satellite gratuitement, c'est à dire accessibles sans abonnement particulier, depuis un décodeur.

Dans une telle installation, l'utilisateur peut contrôler le réseau domestique depuis l'un des appareils qui devient un appareil contrôleur, à travers une application qui exploite un protocole de communication comme par exemple le protocole HAVi. Cet appareil est par exemple un téléviseur capable d'afficher une interface d'application permettant à l'utilisateur d'effectuer des sélections dans des menus au moyen d'une télécommande. L'utilisateur peut ainsi prendre connaissance des différents appareils connectés et d'un certain nombre de propriétés et de caractéristiques de ceux-ci. Il peut également consulter pour chaque appareil donné la liste des contenus disponible au niveau de cet appareil. Lorsque l'utilisateur souhaite visualiser un contenu, il doit donc piloter l'application pour consulter appareil par appareil chaque liste de contenus jusqu'à voir apparaître le contenu qu'il souhaite visualiser. Cette opération est relativement longue car pour chaque consultation, l'appareil contrôleur doit communiquer avec l'appareil correspondant pour récupérer des informations et afficher la liste des contenus correspondante. Par conséquent le choix d'un contenu est relativement long et fastidieux, si bien que cette possibilité n'est pas exploitable d'un point de vue pratique par l'utilisateur.

Le document US 6,140,334 - ALLPORT décrit une télécommande contrôlant plusieurs appareils à l'aide d'une liaison infra-rouge. La télécommande communique avec les appareils pour envoyer des commandes et éventuellement recevoir des informations. Les appareils étant fixes, ils ne peuvent communiquer entre eux par infra-rouge, de ce fait ils ne constituent pas un réseau domestique. La télécommande doit interroger chaque appareil individuellement pour obtenir l'ensemble des informations.

Le document WO 00/40017 - HANCOCK décrit un système comprenant une télévision connectée à un récepteur de signaux provenant d'un câble, un décodeur recevant des signaux d'une antenne satellite, un magnétoscope ou d'autres appareils d'entrée. Les appareils sont reliés par des liaisons spécifiques et ne sont pas connectés à l'aide d'un réseau domestique. En effet, pour enregistrer des émissions sur le magnétoscope à partir du câble ou du satellite, il n'est pas possible de la faire par la TV, il faut comme le montre la figure 1 une liaison spécifique. Ce document présente une autre solution au problème de surcharge du réseau consiste à supprimer le réseau et à établir des liaisons spécifiques entre deux appareils.

Le but de l'invention est de remédier à ces inconvénients en proposant un procédé pour établir une telle liste en un temps réduit.

A cet effet, l'invention a pour objet un procédé pour établir une liste de contenus dans un appareil contrôleur connecté à un réseau domestique auquel sont connectés plusieurs appareils fournissant chacun des contenus, caractérisé en ce qu'il consiste à émettre depuis l'appareil contrôleur une commande spécifiant un critère de filtrage, à établir dans chaque appareil une liste locale sur réception de cette commande, chaque liste locale énumérant les contenus fournis par l'appareil dans lequel elle est établie et entrant dans le critère de filtrage spécifié par la commande, à transférer chaque liste locale depuis l'appareil dans lequel elle est établie vers l'appareil contrôleur, et à assembler dans l'appareil contrôleur les listes locales reçues pour former la liste de contenus.

L'utilisateur peut ainsi sélectionner un critère de filtrage comme par exemple "sports" et visualiser la liste des contenus entrant dans ce critère de filtrage et disponibles sur l'ensemble des appareils. La recherche d'un contenu sur l'ensemble du réseau est ainsi réalisée en un temps très court. Le temps de réaction est optimisé du fait que la quantité de données circulant dans le réseau est réduite aux données relatives à un critère de filtrage. Ce temps de réaction est également optimisé par le fait que les traitements de filtrage nécessaires à l'élaboration d'une liste des contenus correspondant à un critère de filtrage sont réalisés simultanément dans les différents appareils connectés au réseau au lieu d'être centralisés dans un seul appareil.

Dans un mode de réalisation préféré, après établissement d'une liste locale dans un appareil, une notification est émise depuis cet appareil vers l'appareil contrôleur, et chaque liste locale est transférée sur réception d'une requête de transfert émise par l'appareil contrôleur. La quantité de données circulant dans le réseau domestique est ainsi gérée par l'appareil contrôleur indépendamment de la charge qui est appliquée aux appareils connectés au réseau pour établir les listes locales.

Dans un autre mode de réalisation, l'appareil contrôleur émet des requêtes de transfert vers un appareil connecté non pas systématiquement, mais à la suite d'une requête de l'utilisateur. Une condition supplémentaire est nécessaire pour émettre les requêtes de transfert, notamment une action spécifique de l'utilisateur. Ainsi, le temps nécessaire à l'établissement des listes locales dans les appareils connectés au réseau peut être masqué. Dans ce mode de mise en oeuvre, les appareils connectés au réseau sont commandés par l'appareil contrôleur pour établir des listes locales à chaque sélection d'un critère de filtrage par l'utilisateur dans l'application tournant sur l'appareil contrôleur. Lorsque l'utilisateur valide son choix, les transferts de listes locales sont déclenchés pour établir la liste des contenus dans l'appareil contrôleur.

Dans un autre mode de mise en oeuvre, chaque requête de transfert est émise depuis l'appareil contrôleur sur réception de la notification correspondante. Avantageusement, l'application peut être conçue pour assembler les listes locales de façon dynamique au fur et à mesure qu'elles sont reçues dans l'appareil contrôleur. De cette manière, la réactivité du système est améliorée en évitant d'avoir à attendre que toutes les listes locales aient été constituées pour commencer à afficher la liste des contenus dans l'appareil contrôleur.

L'invention propose également un appareil connecté à un réseau domestique, et apte à fournir des contenus. Cet appareil comprend des moyens programmés pour établir une liste locale sur réception d'une commande émise par un autre appareil spécifiant un critère de filtrage, cette liste locale énumérant les contenus fournis dans l'appareil et entrant dans le critère de filtrage spécifié par la commande. Cet appareil comporte également des moyens pour transférer par le réseau cette liste locale vers l'autre appareil connecté au réseau, émetteur de ladite commande.

L'invention propose également un appareil connecté à un réseau domestique, et apte à afficher une liste de contenus. Cet appareil comprend des moyens programmés pour émettre sur le réseau une commande spécifiant un critère de filtrage, et pour recevoir par le réseau une liste locale depuis un autre appareil connecté au réseau, cette liste locale ayant été établie en réponse à la commande.

L'invention propose également un appareil connecté à un réseau domestique, apte à fournir des contenus et à afficher une liste de contenus. Cet appareil comprend des moyens programmés pour établir une liste locale sur réception d'une commande spécifiant un critère de filtrage émise par un autre appareil, cette liste locale énumérant les contenus fournis dans l'appareil et entrant dans le critère de filtrage spécifié par la commande, et pour transférer par le réseau cette liste locale vers l'autre appareil émetteur de ladite commande. Cet appareil comprend également des moyens programmés pour émettre sur le réseau une commande spécifiant un critère de filtrage, et pour recevoir par le réseau une liste locale depuis un autre appareil connecté au réseau.

L'invention sera maintenant décrite plus en détail, et en référence aux dessins annexés qui en illustrent une forme de réalisation à titre d'exemple non limitatif.
La figure 1 est une représentation schématique d'un réseau domestique ;
La figure 2 est une représentation du procédé selon l'invention sous forme d'un schéma d'échanges dynamique ;
La figure 3 est une représentation du procédé selon l'invention sous forme de diagramme séquentiel ;
La figure 4 est un premier exemple de sélection d'un critère de filtrage avec le procédé selon l'invention ;
La figure 5 est un second exemple de sélection d'un critère de filtrage avec le procédé selon l'invention.

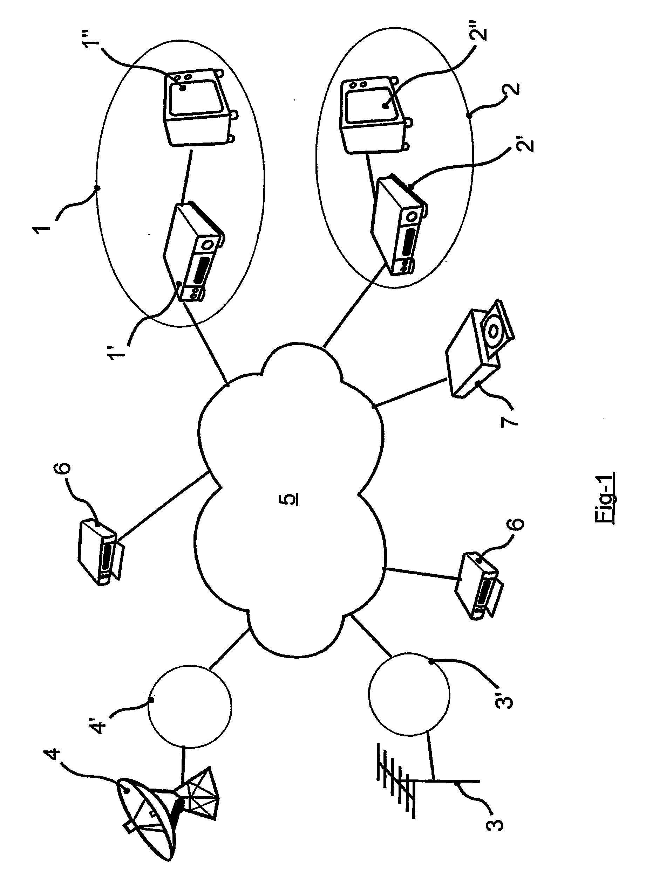

La figure 1 représente un exemple de réseau domestique comprenant deux ensembles de récepteurs de chaînes télévisées 1 et 2, chaque ensemble inclut un décodeur 1', 2' connecté à un téléviseur 1", 2". L'ensemble constitué d'un téléviseur et d'un décodeur peut être formé par deux éléments distincts reliés l'un à l'autre et vendus séparément, mais le décodeur peut également être intégré à un téléviseur numérique. Chaque décodeur 1' est connecté à d'autres appareils par l'intermédiaire d'un réseau domestique 5. Ces appareils induent une antenne 3 reliée au réseau 5 par l'intermédiaire d'un tuner 3' pour recevoir des chaînes numériques diffusées par voie numérique terrestre. De manière analogue, une antenne parabolique 4 est reliée au réseau 5 par l'intermédiaire d'un autre tuner 4', pour recevoir des chaînes numériques diffusées par satellite. Chaque ensemble 1, 2 qui est relié au réseau 5 est ainsi apte à accéder à la fois aux chaînes numériques terrestres reçues sur l'antenne 3 et aux chaînes diffusées par satellite. L'installation inclut également deux disques durs 6 dans lesquels peuvent être enregistrés des films ou autres contenus tels que des fichiers MP3 ainsi qu'un lecteur de CD ou DVD 7, connectés au réseau 5 de sorte que chaque ensemble 1, 2 peut accéder à leur contenu. Chaque appareil connecté au réseau 5 comprend en outre une unité centrale associée à des moyens de mémoire et à des moyens de communication. Lesdits moyens de mémoire contiennent un programme exécutable.

L'ensemble 1 est ici apte à exploiter une application dont l'interface est affichée sur le téléviseur 1" et qui peut être pilotée par l'utilisateur au moyen d'une télécommande pour naviguer dans des menus en vue de visualiser des contenus fournis par les autres appareils connectés au réseau 5. Cette application comprend aussi des fonctionnalités permettant de visualiser des listes des contenus fournis par ces appareils.

Selon l'invention, l'établissement d'une liste de contenus dans l'appareil contrôleur 1 consiste à émettre depuis cet appareil contrôleur 1 une commande spécifiant un critère de filtrage de contenus pour établir des listes locales dans les différents appareils connectés au réseau 5. Avantageusement, cette commande est diffusée à tout le réseau sans spécifier d'appareils destinataires, chaque appareil du réseau décide d'y répondre ou non. Cette diffusion permet d'économiser de la bande passante en éviter d'envoyer autant de commandes qu'il y a d'appareils. Les appareils qui ne disposent d'aucun contenu correspondant au critère n'ont pas besoin d'y répondre, ce qui évite d'envoyer une liste vide. Chaque liste locale qui est établie dans un appareil connecté au réseau 5 sur réception de la commande énumère les contenus entrant dans le critère de filtrage spécifié par la commande, ce qui constitue des listes locales ayant des tailles réduites. Les listes locales sont ensuite transférées vers l'appareil contrôleur pour y être assemblées de manière à former la liste demandée.

Avec ce procédé, les traitements nécessaires à l'établissement des listes sont parallélisés en étant réalisés simultanément dans plusieurs appareils connectés au réseau, ce qui procure un gain de temps significatif. D'autre part, la quantité de données circulant dans le réseau est relativement faible puisque seules les données correspondant au critère de filtrage demandé par l'utilisateur (défini par une liste locale) sont transmises à l'appareil contrôleur. Plus particulièrement, l'application est conçue pour que l'utilisateur puisse y sélectionner un critère de filtrage, en vue de demander l'affichage d'une liste des contenus entrant dans ce critère de filtrage. Ce critère de filtrage peut être par exemple "sport", de sorte que la liste des contenus correspondante énumère les émissions ou reportages à caractère sportif. La recherche d'un contenu est ainsi simplifiée par le fait qu'elle est directement conditionnée à un critère de filtrage, ce qui permet à la fois de réduire la quantité de données circulant dans le réseau tout en permettant l'établissement d'une liste des contenus disponibles sur différents appareils connectés au réseau en un temps très court. Les commandes sont émises depuis un appareil contrôleur comme par exemple appareil 1 ou appareil 2, vers les autres appareils connectés au réseau 5. Mais chaque appareil connecté au réseau peut être contrôleur, de sorte que l'ensemble de ces appareils constitue un système multi-contrôleur dans lequel plusieurs appareils peuvent être à la fois contrôleur et contrôlé.

Ce procédé permet d'autre part d'améliorer la robustesse du système puisque les données sont enregistrées dans différents appareils, de sorte que la mise en défaut de l'un des appareils ne génère pas la perte de l'ensemble des données.

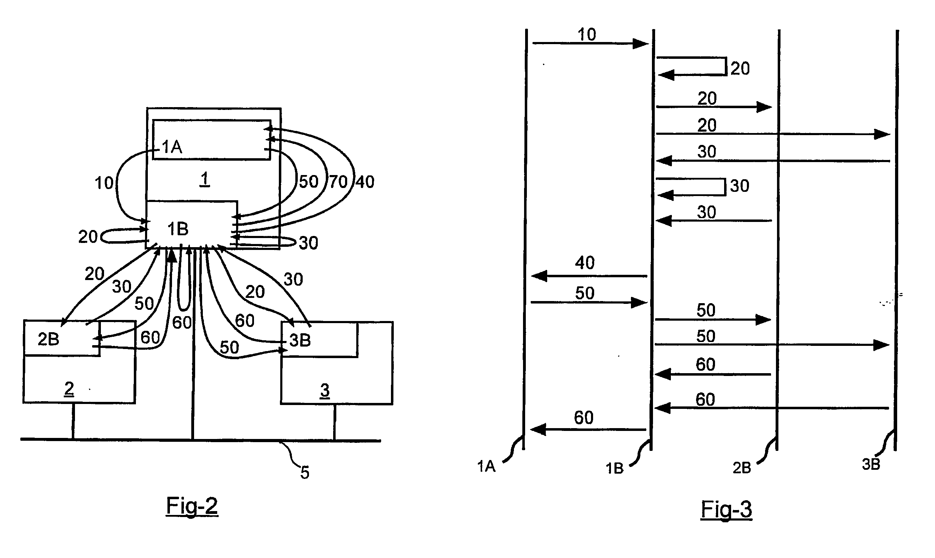

Le procédé selon l'invention est représenté de manière schématique sur les figures 2 et 3, dans lesquelles trois appareils 1, 2 et 3 sont interconnectés par l'intermédiaire d'un réseau domestique 5. L'appareil 1 joue ici un rôle d'appareil contrôleur pour établir une liste des contenus.

Dans un mode de réalisation préféré de l'invention, l'établissement d'une liste locale par un appareil 2, 3 est suivi de l'émission vers l'appareil contrôleur 1 d'une notification 30, et le transfert d'une liste locale 60 vers l'appareil contrôleur 1 est réalisé sur réception par l'appareil correspondant d'une requête de transfert 50 émise par l'appareil contrôleur 1. L'appareil contrôleur 1 est ainsi apte à gérer indépendamment la quantité de données circulant dans le réseau 5 et la charge de traitement qu'il demande à chaque appareil 2, 3.

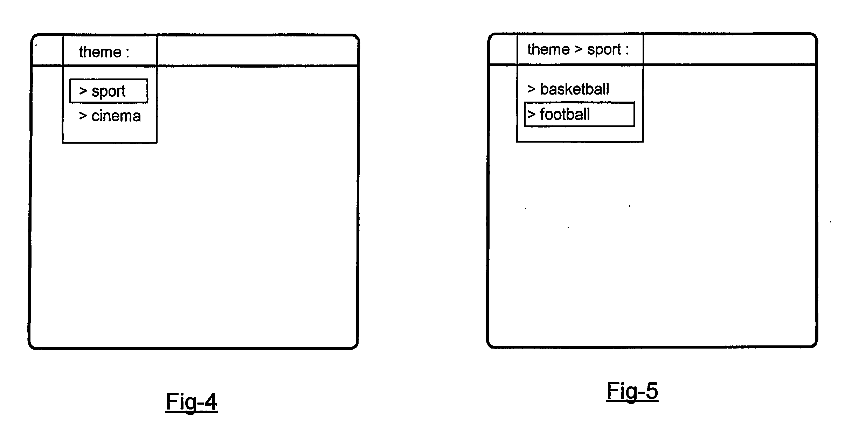

Cette caractéristique consistant à émettre une notification 30 lorsqu'une liste locale est établie et à transmettre cette liste locale 60 sur réception d'une requête de transfert 50 se révèle particulièrement avantageuse pour optimiser les temps de réponse du système en permettant de moduler son mode de fonctionnement. Dans un mode de réalisation, l'appareil contrôleur 1 commande en 20 les appareils connectés 2, 3 pour qu'ils établissent des listes locales, et des requêtes de transfert 50 sont émises suite à une action spécifique exécutée par l'utilisateur. Le temps de traitement dans les appareils 2, 3 connectés au réseau domestique 5 peut ainsi être masqué. Plus particulièrement une commande 20 est émise à chaque sélection d'un critère de filtrage par l'utilisateur dans l'application tournant sur l'appareil contrôleur 1. Dans l'exemple de la figure 4 l'utilisateur sélectionne le thème "sport" parmi "sport" et "cinéma", ce qui génère une première commande 20 suite à laquelle des listes locales correspondant au critère de filtrage "sport" sont établies dans les appareils connectés au réseau 5. Dans une étape suivante représentée figure 5, l'utilisateur sélectionne "football" parmi les "thèmes de sport" "football" et "basket-ball", ce qui génère une seconde commande 20 induisant l'établissement des listes locales correspondant à "football" dans les appareils connectés. Les données qui seront requises pour l'établissement de la liste des contenus correspondant à "football" dans l'appareil contrôleur 1 sont ainsi prêtes dans les appareils 2, 3 connectés au réseau. Lorsque l'utilisateur valide la sélection "football" par une action spécifique de validation sur sa télécommande, les requêtes de transfert 50 sont émises pour déclencher les transferts de listes locales en 60 vers l'appareil contrôleur 1. Ceci permet de former la liste des contenus demandée, à savoir dans l'exemple des figures 4 et 5, la liste des matchs de football actuellement disponibles.

Ce mode de mise en oeuvre est particulièrement adapté au cas où l'utilisateur choisirait son critère de filtrage par sélections successives dans l'interface de l'application. A tout moment, la sélection dans laquelle se trouve l'utilisateur peut être le critère de filtrage dont il souhaite voir la liste des contenus, et les données correspondantes sont calculées en permanence dans les différents appareils connectés au réseau. Lorsque l'utilisateur valide la sélection dans laquelle il se trouve, les données sont prêtes et il ne reste plus qu'à les transférer vers l'appareil contrôleur ce qui procure un gain de temps significatif.

Avantageusement, les contenus dynamiques comme par exemple les programmes audiovisuels reçus par voie satellite ou numérique terrestre diffusés en permanence, peuvent être mémorisés et mis à jour localement de manière à être plus rapidement disponibles lorsqu'un utilisateur les demande. Dans ce cas, un appareil contrôleur émet de façon cyclique des commandes 20 aux appareils 3 et 4 qui reçoivent les programmes dynamiques pour que ceux-ci constituent des listes locales et maintiennent des listes locales à jour. Lorsque l'utilisateur souhaite consulter les listes de contenus de ces appareils, des requêtes de transfert 50 sont émises pour déclencher le transfert des listes locales à jour vers l'appareil contrôleur correspondant. De cette manière, la gestion de listes de contenus dynamiques consiste à tenir à jour ces listes locales sans générer une charge importante sur le réseau puisque les données ne sont transférées que lorsque l'appareil contrôleur les demande.

Dans un autre mode de réalisation, l'appareil contrôleur émet chaque requête de transfert 50 sur réception d'une notification 30. Avantageusement, l'application peut être conçue pour assembler les listes locales de façon dynamique au fur et à mesure qu'elles sont reçues en 60 dans l'appareil contrôleur. De cette manière, la réactivité du système est améliorée en évitant d'avoir à attendre que toutes les listes locales aient été constituées pour commencer à afficher partiellement la liste des contenus dans l'appareil contrôleur.

L'invention peut avantageusement être mise en oeuvre sous forme d'un composant d'un protocole de communication implémenté dans des moyens programmables intégrés à chaque appareil, de manière à former une fonctionnalité supplémentaire du protocole pouvant être pilotée par une application. Un tel composant, encore appelé composant système peut par exemple être intégré au protocole HAVi qui est prévu pour recevoir de tels composants formant en quelque sorte des extensions aux fonctions de base offertes par le protocole HAVi. De cette manière, il est possible d'intégrer les avantages procurés par le protocole HAVi, notamment en ce qui conceme la prise en compte en temps réel et de manière transparente pour l'utilisateur de la connexion ou de la déconnexion d'un appareil au réseau 5. En effet, le protocole HAVi inclut cette fonctionnalité, de sorte que la connexion ou la déconnexion d'un appareil est immédiatement signifiée aux autres appareils, ce qui permet de mettre rapidement à jour une liste de contenus dans un appareil en déclenchant subséquemment les requêtes correspondantes. En se reportant à nouveau à la figure 2, il est visible que les requêtes représentées par les flèches 10 à 70 qui circulent entre les appareils 1, 2 et 3 à travers le réseau 5 sont en fait gérées par le protocole d'exploitation du réseau domestique auquel les blocs 1B, 2B, 3B sont intégrés. Plus particulièrement, sur réception d'une commande telle que 20, le composant correspondant établit la liste locale des contenus disponibles dans l'appareil auquel il est intégré et correspondant au critère de filtrage contenu dans la commande 20. Avantageusement, ce composant est piloté par l'application 1A pour gérer les différents évènements conduisant à la constitution d'une liste des contenus. Cette application 1A est une application logicielle qui peut par exemple être téléchargée dans la mémoire d'un appareil, à partir d'un support, de sorte qu'il soit possible de disposer de la dernière mise à jour, sans avoir nécessairement à changer d'appareil.

Dans l'exemple de la figure 2, l'application 1A émet en 10 une demande de liste des contenus en direction du composant 1B. Le composant 1B convertit cette demande de liste des contenus en plusieurs commandes 20 qui sont émises sur le réseau respectivement en direction des appareils 2, 3 ainsi qu'en direction du composant 1B lui-même. Chaque composant 1B, 2B et 3B établit alors une liste locale avant d'émettre les notifications correspondantes 30 en direction du composant 1B. L'application 1A est ensuite informée en 40 dès que toutes les notifications 30 ont été reçues en 1B. Les transferts des différentes listes locales sont ordonnés par l'application 1A qui pilote le composant 1B en 50 pour qu'il rapatrie les listes locales depuis les appareils 2 et 3. Ceci conduit aux requêtes de transfert illustrées par les flèches 50, et aux transferts subséquents 60. Les listes locales sont ensuite assemblées dans le composant 1B et transmises à l'application 1A en 70 pour affichage à l'utilisateur.

Les exemples de réalisation de l'invention présentés ci-dessus ont été choisis pour leurs caractères concrets. Il ne serait cependant pas possible de répertorier de manière exhaustive tous les modes de réalisation que recouvre cette invention. En particulier, toute étape ou tout moyen décrit peut-être remplacé par une étape ou un moyen équivalent sans sortir du cadre de la présente invention.

## Revendications

1. Procédé pour établir une liste de contenus dans un appareil contrôleur (1,1') connecté à un réseau domestique (5) auquel sont connectés plusieurs appareils (2, 2', 3, 3', 4, 4', 6, 7) fournissant chacun des contenus, **caractérisé en ce qu'**il consiste
- à émettre sur le réseau depuis l'appareil contrôleur une commande (20) spécifiant un critère de filtrage,
- à établir dans chaque appareil (2, 2', 3, 3', 4, 4', 6, 7) une liste locale sur réception de cette commande (20), chaque liste locale énumérant les contenus fournis par l'appareil dans lequel elle est établie et entrant dans le critère de filtrage spécifié par la commande (20),
- à transférer par le réseau chaque liste locale depuis l'appareil dans lequel elle est établie vers l'appareil contrôleur (1, 1'),
- et à assembler dans l'appareil contrôleur (1, 1') les listes locales reçues du réseau pour former la liste des contenus.

2. Procédé selon la revendication 1, dans lequel après établissement d'une liste locale dans un appareil, une notification (30) est émise depuis cet appareil vers l'appareil contrôleur, et dans lequel chaque liste locale est transférée sur réception d'une requête de transfert (50) émise par l'appareil contrôleur (1').

3. Procédé selon la revendication 2, dans lequel l'appareil contrôleur émet des requêtes de transfert (50) vers chaque appareil connecté (1, 1', 2, 2', 3, 3', 4, 4', 6, 7) suite à une action spécifique de l'utilisateur.

4. Procédé selon la revendication 2, dans lequel chaque requête de transfert (50) est émise depuis l'appareil contrôleur sur réception de la notification (30) correspondante.

5. Procédé selon la revendication 4, consistant à établir la liste des contenus dans l'appareil contrôleur en assemblant les listes locales de façon dynamique au fur et à mesure qu'elles sont reçues.

6. Procédé selon l'une quelconque des revendications précédentes, consistant à envoyer une seule commande (20) à l'ensemble du réseau sans spécifier d'appareils destinataires, chaque appareil recevant la commande décidant d'y répondre ou non.

7. Appareil (1, 1', 2, 2', 3, 3', 4, 4', 6, 7) connecté à un réseau domestique (5), et apte à fournir des contenus, **caractérisé en ce qu'**il comprend des moyens programmés pour établir une liste locale sur réception d'une commande (20) spécifiant un critère de filtrage émise par un autre appareil connecté au réseau, cette liste locale énumérant les contenus fournis dans l'appareil et entrant dans le critère de filtrage spécifié par la commande (20), et pour transférer par le réseau cette liste locale vers l' autre appareil connecté au réseau (5), émetteur de ladite commande (20).

8. Appareil (1, 1', 2, 2', 3, 3', 4, 4', 6, 7) connecté à un réseau domestique (5), et apte à afficher une liste de contenus, **caractérisé en ce qu'**il comprend des moyens programmés pour émettre sur le réseau une commande (20) spécifiant un critère de filtrage, et pour recevoir par le réseau une liste locale depuis un autre appareil connecté au réseau (5), cette liste locale ayant été établie en réponse à la commande (20).

9. Appareil (1, 1', 2, 2', 3, 3', 4, 4', 6, 7) connecté à un réseau domestique (5), apte à fournir des contenus et à afficher une liste de contenus, **caractérisé en ce qu'**il comprend des moyens programmés pour établir une liste locale sur réception d'une commande (20) spécifiant un critère de filtrage émise par un autre appareil connecté au réseau, cette liste locale énumérant les contenus fournis dans l'appareil et entrant dans le critère de filtrage spécifié par la commande (20), et pour transférer par le réseau cette liste locale vers l' autre appareil connecté au réseau (5), émetteur de ladite commande (20), ainsi que des moyens programmés pour émettre sur le réseau une commande (20) spécifiant un critère de filtrage, et pour recevoir par le réseau une liste locale depuis un autre appareil connecté au réseau (5).

## Claims

1. Method for drawing up a list of contents in a controller device (1, 1') connected to a domestic network (5) which is connected to several devices (2, 2', 3, 3', 4, 4', 6, 7) each providing contents, **characterized in that** it consists in
- transmitting a command (20) specifying a filtering criterion from the controller device over the network,
- drawing up a local list in each device (2, 2', 3, 3', 4, 4', 6, 7) upon reception of this command (20), each local list enumerating the contents provided by the device in which it is drawn up and entering into the filtering criterion specified by the command (20),
- transferring each local list via the network to the controller device (1, 1') from the device in which the list was drawn up,
- and assembling the local lists received from the network in the controller device (1, 1') in order to form the list of contents.

2. Method according to claim 1, in which after drawing up a local list in a device, a notification (30) is sent from this device to the controller device and in which each local list is transferred on reception of a transfer request (50) sent by the controller device (1').

3. Method according to claim 2, in which the controller device sends transfer requests (50) to each device connected (1, 1', 2, 2', 3, 3', 4, 4', 6, 7) after a specific action of the user.

4. Method according to claim 2, in which each transfer request (50) is sent from the controller device on reception of the corresponding notification (30).

5. Method according to claim 4, consisting in drawing up the list of contents in the controller device by assembling the local lists in a dynamic manner as they are received.

6. Method according to any one of the aforementioned claims, consisting in sending a single command (20) to all the network without specifying any recipient devices, each device receiving the command deciding whether or not to answer.

7. Device (1, 1', 2, 2', 3, 3', 4, 4', 6, 7) connected to a domestic network (5), and capable of providing contents, **characterized in that** it comprises programmed means for drawing up a local list on reception of a command (20) specifying a filtering criterion sent by another device connected to the network, this local list enumerating the content provided in the device and entering into the filtering criterion specified by the command (20), and for transferring this local list over the network to the other device connected to the network (5), transmitter of the said command (20).

8. Device (1, 1', 2, 2', 3, 3', 4, 4', 6, 7) connected to a domestic network (5), and capable of providing a list of contents, **characterized in that** it comprises programmed means for transmitting, via the network, a command (20) specifying a filtering criterion, and for receiving, via the network, a local list from another device connected to the network (5), this local list having been drawn up in response to the command (20).

9. Device (1, 1', 2, 2', 3, 3', 4, 4', 6, 7) connected to a domestic network (5), capable of providing contents and displaying a list of contents, **characterized in that** it comprises programmed means for drawing up a local list on reception of a command (20) specifying a filtering criterion sent by another device connected to the network, this local list enumerating the content provided in the device and entering into the filtering criterion specified by the command (20), and for transferring this local list over the network to the other device connected to the network (5), transmitter of the said command (20), as well as programmed means for transmitting on the network a command (20) specifying a filtering criterion, and for receiving, via the network, a local list from another device connected to the network (5).

## Patentansprüche

1. Verfahren zur Erstellung einer Liste von Inhalten in einem Controller-Gerät (1, 1'), das mit einem Hausnetzwerk (5) verbunden ist, mit dem mehrere Geräte (2, 2', 3, 3', 4, 4', 6, 7) verbunden sind, die jeweils Inhalte liefern, **dadurch gekennzeichnet, dass** das Verfahren darin besteht,
- über das Netzwerk von dem Controller-Gerät aus einen Befehl (20) auszusenden, der ein Filtrationskriterium vorgibt;
- in jedem Gerät (2, 2', 3, 3', 4, 4', 6, 7) auf den Empfang dieses Befehls (20) hin eine lokale Liste zu erstellen, wobei jede lokale Liste die Inhalte aufzählt, die von dem Gerät, in dem sie erstellt wird, geliefert werden und in das von dem Befehl (20) vorgegebene Filtrationskriterium eingehen,
- jede lokale Liste von dem Gerät aus, in dem sie erstellt wird, zu dem Controller (1, 1') über das Netzwerk zu übertragen und
- in dem Controller (1, 1') die von dem Netzwerk her empfangenen lokalen Listen zu verknüpfen, um die Liste der Inhalte zu bilden.

2. Verfahren nach Anspruch 1, bei dem nach Erstellung einer lokalen Liste in einem Gerät eine Benachrichtigung (30) von diesem Gerät aus zu dem Controller ausgesendet wird und bei dem jede lokale Liste auf den Empfang einer von dem Controller (1') ausgesendeten Übertragungsanforderung (50) hin übertragen wird.

3. Verfahren nach Anspruch 2, bei dem das Controller-Gerät infolge einer spezifischen Aktion des Benutzers Übertragungsanforderungen (50) zu jedem verbundenen Gerät (1, 1' , 2, 2', 3, 3', 4, 4', 6, 7) sendet.

4. Verfahren nach Anspruch 2, bei dem jede Übertragungsanforderung (50) von dem Controller aus auf Empfang der entsprechenden Benachrichtigung (30) hin gesendet wird.

5. Verfahren nach Anspruch 4, welches darin besteht, in dem Controller die Liste der Inhalte zu erstellen, indem die lokalen Listen dynamisch in der Reihenfolge ihres Empfangs verknüpft werden.

6. Verfahren nach einem der vorhergehenden Ansprüche, welches darin besteht, an das gesamte Netzwerk einen einzigen Befehl (20) ohne Vorgabe von Empfangsgeräten zu senden, wobei jedes den Befehl empfangende Gerät entscheidet, ob es darauf antwortet oder nicht.

7. Mit einem Hausnetzwerk (5) verbundenes und für die Lieferung von Inhalten geeignetes Gerät (1, 1', 2, 2', 3, 3', 4, 4', 6, 7), **dadurch gekennzeichnet, dass** es Mittel umfasst, die programmiert sind, um auf Empfang eines Befehls (20) hin, der ein Filtrationskriterium vorgibt und von einem anderen, mit dem Netzwerk verbundenen Gerät ausgesendet wird, eine lokale Liste zu erstellen, wobei diese lokale Liste die Inhalte aufzählt, die in dem Gerät geliefert werden und in das von dem Befehl (20) vorgegebene Filtrationskriterium eingehen, und um über das Netzwerk diese lokale Liste zu dem anderen, mit dem Netzwerk (5) verbundenen Gerät, das den Befehl (20) aussendet, zu übertragen.

8. Mit einem Hausnetzwerk (5) verbundenes und für die Anzeige einer Liste von Inhalten geeignetes Gerät (1, 1', 2, 2', 3, 3', 4, 4', 6, 7), **dadurch gekennzeichnet, dass** es Mittel umfasst, die programmiert sind, um über das Netzwerk einen ein Filtrationskriterium vorgebenden Befehl (20) auszusenden und um über das Netzwerk von einem anderen, mit dem Netzwerk (5) verbundenen Gerät her eine lokale Liste zu empfangen, wobei diese lokale Liste in Reaktion auf den Befehl (20) erstellt worden ist.

9. Mit einem Hausnetzwerk (5) verbundenes und für die Lieferung von Inhalten und die Anzeige einer Liste von Inhalten geeignetes Gerät (1, 1', 2, 2', 3, 3', 4, 4', 6, 7), **dadurch gekennzeichnet, dass** es Mittel umfasst, die programmiert sind, um auf Empfang eines Befehls (20) hin, der ein Filtrationskriterium vorgibt und von einem anderen, mit dem Netzwerk verbundenen Gerät ausgesendet wird, eine lokale Liste zu erstellen, wobei diese lokale Liste die Inhalte aufzählt, die in dem Gerät geliefert werden und in das von dem Befehl (20) vorgegebene Filtrationskriterium eingehen, und um über das Netzwerk diese lokale Liste zu dem anderen, mit dem Netzwerk (5) verbundenen Gerät, das den Befehl (20) aussendet, zu übertragen, sowie Mittel, die programmiert sind, um über das Netzwerk einen ein Filtrationskriterium vorgebenden Befehl (20) auszusenden und um über das Netzwerk von einem anderen, mit dem Netzwerk (5) verbundenen Gerät her eine lokale Liste zu empfangen.
